(19) Europäisches Patentamt / European Patent Office / Office européen des brevets

(11) **EP 3 880 686 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **19730778.8**

(22) Anmeldetag: **14.06.2019**

(51) Internationale Patentklassifikation (IPC):
***C07F 7/16*** *(2006.01)*

(52) Gemeinsame Patentklassifikation (CPC):
**C07F 7/16**

(86) Internationale Anmeldenummer:
**PCT/EP2019/065735**

(87) Internationale Veröffentlichungsnummer:
**WO 2020/249237 (17.12.2020 Gazette 2020/51)**

(54) **VERFAHREN ZUR HERSTELLUNG VON METHYLCHLORSILANEN MIT STRUKTUROPTIMIERTEN SILICIUM-PARTIKELN**

PROCESS FOR PREPARING METHYLCHLOROSILANES WITH STRUCTURE-OPTIMISED SILICON PARTICLES

PROCÉDÉ POUR PRODUIRE DES MÉTHYLCHLOROSILANES AU MOYEN DE PARTICULES DE SILICIUM À STRUCTURE OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.09.2021 Patentblatt 2021/38**

(73) Patentinhaber: **Wacker Chemie AG**
**81737 München (DE)**

(72) Erfinder:
• **RIMBÖCK, Karl-Heinz**
**84431 Heldenstein (DE)**
• **MÜLLER, Michael**
**84489 Burghausen (DE)**
• **SOFINA, Natalia**
**84489 Burghausen (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
• **DATABASE CA [Online] CHEMICAL ABSTRACTS SERVICE, COLUMBUS, OHIO, US; 1988, XP002797297, gefunden im STN Database accession no. 111:232979 & LOBUSEVICH, N.P ET AL.: "Effect of dispersion of silicon and copper in catalysts on direct synthesis", KHIMIYA KREMNIIORGANICH. SOED., 1988, Seiten 27-35, in der Anmeldung erwähnt**

**Beschreibung**

Die Erfindung betrifft ein Verfahren zur Herstellung von Methylchlorsilanen aus einem Chlormethan enthaltenden Reaktionsgas und einer partikulären Siliciumkontaktmasse, die strukturoptimierte Silicium-Partikel enthält, in einem Wirbelschichtreaktor.

Der Markt für Silicium-Produkte stellt ein sich schnell veränderndes Umfeld für die darin tätigen Unternehmen dar. Eine sich wandelnde Nachfrage, steigende Qualitätsanforderungen, schwankende Preise für Rohstoffe und Energie sowie strengere Regulierungen verlangen ein hohes Maß an operativer Agilität und Effizienz, um größtmögliche Wirtschaftlichkeit zu erreichen.

Eine besonders wichtige Produktgruppe ist hierbei unter der technischen Bezeichnung Silicone zusammengefasst: die Stoffklasse der Polysiloxane. Die industrielle Herstellung von Siliconen erfolgt über die Hydrolyse und anschließende Kondensation von Organochlorsilanen. In der technischen Silicon-Chemie sind Methylsiloxane dominierend, weswegen der Synthese der entsprechenden Ausgangsstoffe, der Chlor(methyl)silane, die größte wirtschaftliche Bedeutung zukommt. Letztere werden in der Industrie fast ausschließlich über die sogenannte Müller-Rochow-Direktsynthese (MRDS) produziert.

Bei der MRDS werden in der Regel eine organische Verbindung mit an Kohlenstoff gebundenem Chlor, meist Chlormethan (MeCl), und Silicium in Gegenwart eines Katalysators und gegebenenfalls geeigneten Promotoren zu Organochlorsilanen, insbesondere Chlor(methyl)silane (MCS), gemäß Reaktionsgleichung (1), umgesetzt.

(1)    $Si + CH_3Cl$ (Katalysator, gegebenenfalls Promotor) ---> $(CH_3)_nH_mSiCl_{4-n-m}$ + Nebenprodukte (n = 1-3, m = 0, 1)

Typische Haupt- und Nebenprodukte der MRDS und deren üblicherweise auftretender Anteil sind in Tabelle 1 zusammengefasst. Ferner können Verunreinigungen wie Kohlenwasserstoffe und Metallchloride Bestandteil der Nebenprodukte sein. Um hochreine Organochlorsilane zu erzeugen, erfolgt daher anschließend gemeinhin eine Destillation.

Tabelle 1

| Silan | Formel | Typischer Anteil [Masse- %] |
|---|---|---|
| Dimethyldichlorsilan | $(CH_3)_2SiCl_2$ | 75-94 |
| Methyltrichlorsilan | $(CH_3)SiCl_3$ | 3-15 |
| Trimethylchlorsilan | $(CH_3)_3SiCl$ | 2-5 |
| Methyldichlorsilan | $(CH_3)HSiCl_2$ | 0,5-4 |
| Dimethylchlorsilan | $(CH_3)_2HSiCl$ | 0,1-0,5 |
| Tetrachlorsilan | $SiCl_4$ | < 0,1 |
| Tetramethylsilan | $(CH_3)_4Si$ | 0,1-1 |
| Trichlorsilan | $HSiCl_3$ | < 0,1 |
| Disilane | $(CH_3)_xSi_2Cl_{6-x}$ | 2-8 |

Neben einer möglichst hohen Produktivität (Menge an gebildeten Organochlorsilanen pro Zeiteinheit und Reaktionsvolumen) und einer möglichst hohen Selektivität - insbesondere bezogen auf das grundsätzlich wichtigste Zielprodukt Dimethyldichlorsilan (DMDCS, $(CH_3)_2SiCl_2$) - wird dabei auch eine möglichst hohe Silicium-Nutzung, verbunden mit einem sicheren und gleichzeitig flexiblen Betrieb der gesamten Anlage gefordert. DMDCS wird beispielsweise für die Herstellung von linearen und cyclischen Siloxanen benötigt, die ihrerseits weiter polymerisiert werden können, um ein breites Spektrum von Polydimethylsiloxanen herzustellen. Ferner wird eine möglichst lange Laufzeit der Reaktoren zwischen Abstellungen zu Reinigungszwecken angestrebt.

Die MRDS kann diskontinuierlich oder kontinuierlich durchgeführt werden. Bei beiden Varianten erfolgt die großtechnische Herstellung der Organochlorsilane grundsätzlich über eine Wirbelbettreaktion, wobei das Reaktionsgas, enthaltend Chlormethan, gleichzeitig als Fluidisierungsmedium dient. Bei der Wirbelbettreaktion der MRDS handelt es sich um einen komplexen Prozess, an dem viele unterschiedliche Einflussgrößen und Fachgebiete aufeinandertreffen.

Die wichtigsten Parameter, welche die operative Performance der MRDS beeinflussen sind grundsätzlich die DMDCS-Selektivität, Produktivität, geringe Bildung hochsiedender Nebenprodukte, Nebensilan-Selektivität und/oder -Verhältnis (Nebensilane sind alle Silane, die neben DMDCS bei der MRDS entstehen), der MeCl-Umsatz sowie der Silicium- Nutzung.

Grundsätzlich sind die bekannten Verfahren aufwendig und energieintensiv. So stellt beispielsweise die Kühlung der Reaktoren einen erheblichen Kostenfaktor dar. Die operative Performance der MRDS im Wirbelschichtreaktor hängt neben den einstellbaren Reaktionsparametern v.a. entscheidend von den Rohstoffen ab. Ferner ist es insbesondere für eine kontinuierliche Prozessführung erforderlich, die Eduktkomponenten Silicium und MeCl sowie die Katalysatoren und gegebenenfalls Promotoren unter den Reaktionsbedingungen in den Reaktor einzubringen, was mit einem erheblichen technischen Aufwand verbunden ist. Im Regelfall in gleichem Maße aufwendig sind diskontinuierliche MRDS-Prozesse. Daher ist es wichtig, eine möglichst hohe Produktivität - Menge an gebildeten Organochlorsilanen pro Zeiteinheit und Reaktionsvolumen - und eine möglichst hohe Selektivität bezogen auf das gewünschte Zielprodukt (üblicherweise DMDCS) zu realisieren.

Relativ gut untersucht sind die Anforderungen an das Silicium bezüglich chemischer Zusammensetzung und Partikelgrößenverteilung für die Synthese von Organochlorsilanen; der strukturelle Aufbau von Silicium-Partikeln und dessen Einfluss auf die Umsetzung mit Halogenidhaltigen Reaktionsgasen wurde hingegen nur im Hinblick auf intermetallische Phasen beschrieben. Bisher wurde nicht beschrieben, wie alle drei Einflussfaktoren zusammenwirken müssen, um einen besonders leistungsfähigen Chlorsilan-Herstellprozess zu betreiben.

So offenbart DE 4303766 A1 ein Verfahren zur Herstellung von Methylchlorsilanen aus Silicium und Chlormethan in Gegenwart eines Kupfer-Katalysators und gegebenenfalls Promotorsubstanzen, bei dem die Produktionsraten der einzelnen Methylchlorsilane bezogen auf die Oberfläche des eingesetzten Siliciums durch die Struktur des Siliciums gesteuert werden, wobei das Verfahren dadurch gekennzeichnet ist, dass das Silicium mit der gewünschten Struktur anhand einer Strukturkennzahl QF ausgewählt wird, wobei die Strukturkennzahl QF ermittelt wird, indem

a) Silicium-Probekörper unter Ausbildung einer Schnittfläche aufgeschnitten werden,
b) auf der Schnittfläche die Flächen der eine längliche Form aufweisenden Ausscheidungen intermetallischer Phasen zu einer Flächenzahl A aufsummiert werden,
c) auf der Schnittfläche die Flächen der eine rundliche Form aufweisenden Ausscheidungen intermetallischer Phasen zu einer Flächenzahl B aufsummiert werden und
d) der als Strukturkennzahl QF bezeichnete Quotient aus der Flächenzahl A und der Flächenzahl B gebildet wird

Die Korrelation von QF verschiedener Silicium-Strukturtypen mit deren Verhalten in der MRDS erlaubt die Erkennung optimaler Strukturmerkmale im Silicium und somit die Steuerung der Selektivität und Ausbeuten für die gewünschten Methylchlorsilane in die gewünschte Richtung. In dieser Schrift bezieht sich der Begriff "Struktur" auf die Größe der Kristalle des polykristallinen Siliciums sowie die Zusammensetzung und Lager der intermetallischen Phasen, die sich im Verlauf der Abkühlung und Erstarrung im Herstellungsprozess aus den Hauptverunreinigungen, beispielsweise Al, Ca, Fe, Ti, mit Silicium ausscheiden. Es handelt sich somit lediglich um eine Erweiterung der Erkenntnisse zu voran erwähnten Anforderungen an das Silicium bezüglich chemischer Zusammensetzung für die Synthese von Organochlorsilanen. Zudem ist für eine derartige Einflussname die Anschaffung maßgeschneiderter Silicium-Sorten und/oder das Betreiben einer entsprechenden, eigenen Silicium-Produktion sowie ein enormer analytische Aufwand notwendig. Die Strukturkennzahl QF kann zur Verfeinerung des Strukturparameters S der vorliegenden Erfindung genutzt werden; sie ist jedoch nicht zwingend erforderlich.

US 20100160664 A1 offenbart ein Verfahren zur Herstellung von Alkylhalogensilanen durch Umsetzung eines Alkylhalogenids mit einer Kontaktmasse, bestehend aus Silicium und einem Katalysatorsystem, enthaltend einen Kupfer-Katalysator und eine Gruppe von Promotor-Additiven, wobei der Kupfer-Katalysator als partikuläres Kupferhalogenid eingesetzt wird. Die Kupfer-Katalysator-Partikel werden hierbei wie folgt spezifiziert:

- Sphärizitätsfaktor von 0,6 bis 1
- Partikelgrößenverteilung mit einem Wert für $d_{50}$ von 50 bis 1500 $\mu$m
- poröses Gefüge mit höchstens 0,2 ml/g bei Porendurchmessern von 0,1 bis 10 $\mu$m
- einer Fließfähigkeit von mindestens 8.

Das Verfahren führe laut der Schrift zu einer Aktivität von mindestens 210 g Silane/h/kg und einer DMDCS-Selektivität von mindestens 85 Masse-% bezogen auf die aus der Reaktion erhaltenen Silane. Sie beschreibt somit lediglich die Struktur der Katalysator-Partikel und gibt keine Hinweise darauf, wie Silicium-Partikel bzw. Arbeitskörnung (Körnung, die in den Wirbelschichtreaktor eingebracht wird) beschaffen sein müssen, um eine größtmögliche Produktivität sowie Wirtschaftlichkeit bei der Herstellung von Alkylhalogensilanen zu generieren.

Neben einer unerwünscht hohen Bildung von Nebenprodukten werden die Verfahrenskosten grundsätzlich auch durch nicht umgesetztes Silicium erhöht.

Es ist bekannt, bei der Herstellung von Chlorsilanen in Wirbelschichtreaktoren gezielt Feinkornanteile der einzusetzenden Silicium-Partikel abzutrennen. Beispielsweise nennen Lobusevich, N.P et al, "Effect of dispersion of silicon and copper in catalysts on direct synthesis", Khimiya Kremniiorganich. Soed. 1988, 27-35, eine Arbeitskörnung für Silicium von 70 bis 500 $\mu$m, wobei 70 $\mu$m die minimale und 500 $\mu$m die maximale Korngröße (Korngrößengrenzen oder Bereichsgrenzen) ist und die Zahlenwerte Äquivalenzdurchmesser sind. Lobusevich et *al.* geben an, dass bei der Auswahl der Kontaktmassenkorngröße für die Synthese von Methylchlorsilanen, Ethylchlorsilanen und Trichlorsilan die Wechselwirkung zwischen Festkörper und Gas berücksichtigt werden muss, um eine maximale Stabilität und Effizienz des Verfahrens zu erreichen. In allen Fällen - sowohl für katalysierte als auch für unkatalysierte Varianten - führt die Erhöhung der Silicium-Partikelgröße zu einer erhöhten Selektivität der jeweiligen Zielprodukte (in Bezug auf die vorliegende Erfindung: DMDCS). Die Autoren geben zudem an, dass die Struktur von Silicium-Partikeln die Synthese von Methylchlorsilanen beeinflusst. So wurde gefunden, dass Silicium-Körnungen mit vergleichbarer Partikelgrößenverteilung, die über verschiedene Mahlprozesse aus derselben Silicium-Sorte (d.h. höchster Grad an Vergleichbarkeit, da hinsichtlich Reinheit, Qualität und Gehalt an Nebenelementen/Verunreinigungen im Rahmen der üblichen Schwankung identisch) hergestellt wurden, unterschiedliche Aktivitäten in der MRDS zeigen. Dies wurde am Beispiel von Körnungen untersucht, die über eine Kugel- oder über eine Walzenmühle hergestellt wurden. Bei Körnungen aus der Kugelmühle lagen die Aktivitäten bzw. Reaktionsgeschwindigkeiten 10-30% über jenen der Körnungen aus der Walzenmühle, was die Autoren auf die Struktur der Partikel zurückführten. Die Partikel der Körnung aus der Kugelmühle wiesen im direkten Vergleich mit Partikeln der Walzenmühlen-Körnung eine unregelmäßigere Form auf.

Eine Erhöhung der Partikelgröße fordert jedoch grundsätzlich einen größeren Energieaufwand, da eine höhere Reaktionstemperatur für die Beschleunigung der Reaktion sowie eine höhere Gasgeschwindigkeit zur Erzeugung der Wirbelschicht erforderlich sind. Zwar geben Lobusevich et *al.* an, dass eine anteilige Verwendung von kleineren Silicium-Partikeln im Sinne einer polydispersen Partikelmischung die Aktivität des Siliciums aufgrund einer erhöhten Oberfläche steigert, allerdings sei die Verwendung von Anteilen an kleinen Silicium-Partikeln mit Schwierigkeiten verbunden, da es zu einem erhöhten Austrag von Silicium-Partikeln aus dem Reaktor sowie zu einer Aggregation der Partikel kommen kann. Deshalb ist es nach Lobusevich et *al.* zielführend, trotz des höheren Energieaufwands die Breite der Korngrößenverteilung der eingesetzten Silicium-Partikel zu verringern, die mittlere Partikelgröße zu erhöhen sowie die Symmetrie und Regelmäßigkeit der Oberflächenstruktur der Partikel zu minimieren.

Der vorliegenden Erfindung lag die Aufgabe zugrunde, ein besonders wirtschaftliches Verfahren zur Methylchlorsilan-Herstellung via MRDS bereitzustellen.

Gegenstand der Erfindung ist ein Verfahren zur Herstellung von Methylchlorsilanen der allgemeinen Formel 1

$$(CH_3)_n H_m SiCl_{4-n-m} \qquad (1),$$

in der

n   Werte von 1 bis 3 und
m   Werte von 0 oder 1 bedeuten,

in einem Wirbelschichtreaktor, bei dem ein Chlormethan enthaltendes Reaktionsgas mit einer partikulären Kontaktmasse, die Silicium enthält, in Gegenwart von Kupferkatalysator umgesetzt wird,
wobei die Arbeitskörnung, welche jene Körnung oder Körnungsmischung bedeutet, die in den Wirbelschichtreaktor eingebracht wird, mindestens 1 Masse-% Silicium-enthaltende Partikel S enthält, die durch einen Strukturparameter S beschrieben sind, wobei S dabei einen Wert von mindestens 0 aufweist und wie folgt berechnet wird:

$$S = (\varphi_s - 0{,}70) \cdot \frac{\rho_{SD}}{\rho_F} \qquad\qquad \text{Gleichung (1),}$$

 wobei

$\varphi_s$   Symmetrie-gewichteter Sphärizitätsfaktor
$\rho_{SD}$   Schüttdichte [g/cm$^3$]
$\rho_F$   mittlere Partikelfeststoffdichte [g/cm$^3$] ist.

Überraschenderweise wurde gefunden, dass die Herstellung von Methylchlorsilanen in Wirbelschichtreaktoren besonders wirtschaftlich durchgeführt werden kann, wenn Silicium-enthaltende Partikel in der Arbeitskörnung eingesetzt werden, die bestimmte Struktur-eigenschaften aufweisen. Es zeigte sich, dass dieser Effekt bereits ab einem Anteil von 1 Masse-% der Struktur-optimierten Silicium-Partikel S an der Arbeitskörnung signifikant nachzuweisen ist. Durch den Einsatz eben jener Silicium-Partikel S wird der von Lobusevich, N.P et al, "Effect of dispersion of silicon and copper in catalysts on direct synthesis", Khimiya Kremniiorganich. Soed. 1988, 27-35, beschriebene Staubanteil < 70 μm, im Herstellprozess aufgrund einer Verminderung der Staubbildung durch Abrasion nachhaltig reduziert. Hierdurch ergeben sich mehrere Vorteile gegenüber dem Stand der Technik:

• höhere DMDCS-Selektivität

- verminderte Bildung von Hochsiedern
- höhere Silicium-Nutzung (geringere Verluste über Staubaustrag)
- homogenere Kontaktmasse hinsichtlich Partikelgrößenverteilung sowie hierdurch resultierende Verbesserung der fluidmechanischen Eigenschaften der Wirbelschicht
- Reduzierung von verblockten und/oder zusetzenden Anlagenteilen aufgrund von Aggregation von feinteiligen Partikeln bzw. von Staubanteilen (Partikel mit einer Partikelgröße < 70 $\mu$m)
- verbesserte Förderbarkeit der Partikelmischung
- niedrigere Abrasion durch Struktur-optimierte Partikel
- längere Reaktorlaufzeiten

Zudem wird das Vorurteil von *Lobusevich* et *al.* überwunden, wonach die Aktivität einer Silicium-Körnung mit der Unregelmäßigkeit/Unförmigkeit ihrer Partikel steigt. Denn die Partikel S mit einem Strukturparameter S von $\geq$0 weisen definitionsgemäß einen höheren Grad an Symmetrie auf - wie sich gezeigt hat, steigt auch die Aktivität mit zunehmendem MassenAnteil der Partikel S von $\geq$0 an der Arbeitskörnung. Die nach bisherigem Kenntnisstand bei einer Verkleinerung der mittleren Partikelgröße zu erwartenden negativen Effekte wie ein erhöhter Austrag von kleineren Silicium-Partikeln aus dem Reaktor und das Auftreten von Aggregationseffekten konnten überraschend nicht beobachtet werden. Vielmehr konnte beim erfindungsgemäßen Verfahren neben den bereits genannten Vorteilen ein verbessertes Wirbelverhalten der Kontaktmasse festgestellt werden.

Unter "Körnung" wird eine Mischung aus Silicium-enthaltenden Partikeln verstanden, die beispielsweise durch sogenanntes Atomisieren oder Granulieren von Silicium-haltigen Schmelzen und/oder durch Zerkleinern von stückigem Silicium mittels Brech- und Mahlanlagen hergestellt werden können. Das stückige Silicium kann bevorzugt eine mittlere Partikelgröße von > 10 mm, besonders bevorzugt > 20 mm, insbesondere > 50 mm aufweisen. Körnungen lassen sich im Wesentlichen durch Sieben und/oder Sichten in Fraktionen klassieren.

Eine Mischung verschiedener Körnungen kann als Körnungsmischung und die Körnungen, aus denen die Körnungsmischung besteht, als Körnungsfraktionen bezeichnet werden. Körnungsfraktionen können relativ zueinander gemäß einer oder mehrerer Eigenschaften der Fraktionen eingeteilt werden, wie beispielsweise in Grobkornfraktionen und Feinkornfraktionen. Grundsätzlich ist bei einer Körnungsmischung möglich, mehr als eine Körnungsfraktion in festgelegte relativierte Fraktionen einzuteilen.

Die Arbeitskörnung bezeichnet jene Körnung oder Körnungsmischung, die in den Wirbelschichtreaktor eingebracht wird.

Der Symmetrie-gewichtete Sphärizitätsfaktor $\varphi_s$ ergibt sich aus dem Produkt von Symmetriefaktor und Sphärizität. Beide Formparameter können mittels dynamischer Bildanalyse gemäß ISO 13322 ermittelt werden, wobei die erhaltenen Werte das volumen-gewichtete Mittel über die jeweilige Probe der entsprechenden Partikelmischung der Arbeitskörnung darstellen.

Der Symmetrie-gewichtete Sphärizitätsfaktor der Partikel S beträgt vorzugsweise mindestens 0,70, besonders bevorzugt mindestens 0,72, ganz besonders bevorzugt mindestens 0,75, insbesondere mindestens 0,77 sowie höchstens 1.

Die Sphärizität eines Partikels beschreibt das Verhältnis zwischen dem Flächeninhalt eines Partikelbildes und dem Umfang. Demnach hätte ein kugelförmiges Partikel eine Sphärizität nahe 1, während ein gezacktes, unregelmäßiges Partikelbild eine Rundheit nahe Null hätte.

Bei der Bestimmung des Symmetriefaktors eines Partikels wird zunächst der Schwerpunkt eines Partikelbildes ermittelt. Dann werden in jeder Messrichtung Strecken von Rand zu Rand durch den bestimmten Schwerpunkt gelegt und das Verhältnis der beiden daraus resultierenden Streckenabschnitte vermessen. Der Wert des Symmetriefaktors wird aus dem kleinsten Verhältnis dieser Radien berechnet. Für hochsymmetrische Figuren wie Kreise oder Quadrate beträgt der Wert des jeweiligen Symmetriefaktors gleich 1.

Weitere Formparameter, die mittels dynamischer Bildanalyse bestimmt werden können, sind das Breiten-/Längen-Verhältnis (Maß für die Ausdehnung bzw. Länglichkeit eines Partikels) sowie die Konvexität von Partikeln. Da selbige jedoch in Form des Symmetriefaktors bereits indirekt im Strukturparameter S enthalten sind, kann auf deren Bestimmung im erfindungsgemäßen Verfahren verzichtet werden.

Die Schüttdichte definiert sich als Dichte eines Gemenges aus einem partikulären Feststoff (sog. Schüttgut) und einem kontinuierlichen Fluid (beispielsweise Luft), welches die Freiräume zwischen den Partikeln füllt. Die Schüttdichte der Kornfraktion der Arbeitskörnung mit Strukturparameter S$\geq$0 beträgt bevorzugt 0,8 bis 2,0 g/cm$^3$, besonders bevorzugt 1,0 bis 1,8 g/cm$^3$, ganz besonders bevorzugt 1,1 bis 1,6 g/cm$^3$, insbesondere 1,2 bis 1,5 g/cm$^3$. Die Schüttdichte lässt sich durch das Verhältnis der Masse der Schüttung zum eingenommenen Schüttvolumen gemäß DIN ISO 697 ermitteln.

Die mittlere, massengewichtete Partikelfeststoffdichte $\rho_F$ der Partikel S der Kornfraktion mit Strukturparameter S$\geq$0 beträgt bevorzugt 2,20 bis 2,70 g/cm$^3$, besonders bevorzugt 2,25 bis 2,60 g/cm$^3$, ganz besonders bevorzugt 2,30 bis 2,40 g/cm$^3$, insbesondere 2,31 bis 2,38 g/cm$^3$. Die Bestimmung der Dichte fester Stoffe wird in DIN 66137-2:2019-03 beschrieben.

Die Kornfraktion mit Strukturparameter S≥0 liegt in der Arbeitskörnung bevorzugt in einem Massenanteil von mindestens 1 Masse-%, besonders bevorzugt von mindestens 5 Masse-%, ganz besonders bevorzugt von mindestens 10 Masse-%, insbesondere von mindestens 20 Masse-% vor.

Die Arbeitskörnung weist vorzugsweise einen Partikelgrößenparameter $d_{50}$ von 70 bis 1500 $\mu$m, besonders bevorzugt von 80 bis 1000 $\mu$m, ganz besonders bevorzugt von 100 bis 800 $\mu$m, insbesondere von 120 bis 600 $\mu$m auf.

Die Differenz zwischen den Partikelgrößenparametern $d_{90}$ und $d_{10}$ stellt ein Maß für die Breite einer Körnung oder einer Körnungsfraktion dar. Der Quotient aus der Breite einer Körnung oder einer Körnungsfraktion und dem jeweiligen Partikelgrößenparameter $d_{50}$ entspricht der relativen Breite. Sie kann beispielsweise herangezogen werden, um Partikelgrößenverteilungen mit sehr unterschiedlichen mittleren Partikelgrößen zu vergleichen.

Vorzugsweise beträgt die relative Breite der Körnung der Arbeitskörnung 0,1 bis 500, bevorzugt 0,25 bis 100, besonders bevorzugt 0,5 bis 50, insbesondere 0,75 bis 10.

Die Bestimmung der Partikelgrößen und Partikelgrößenverteilung kann nach ISO 13320 (Laserbeugung) und/oder ISO 13322 (Bildanalyse) erfolgen. Eine Berechnung von Partikelgrößenparametern aus Partikelgrößenverteilungen kann nach DIN ISO 9276-2 erfolgen.

In einer weiteren bevorzugten Ausführungsform weist die Arbeitskörnung eine massengewichtete Oberfläche von 80 bis 1800 cm$^2$/g, bevorzugt von 100 bis 600 cm$^2$/g, besonders bevorzugt von 120 bis 500 cm$^2$/g, insbesondere von 150 bis 350 cm$^2$/g auf.

Vorzugsweise weist die Körnungsmischung der Arbeitskörnung eine p-modale Volumen-gewichtete Verteilungsdichtefunktion auf, wobei p = 1 bis 10, bevorzugt p = 1 bis 6, besonders bevorzugt p = 1 bis 3, insbesondere p = 1 oder 2, ist. Beispielsweise weist eine 2-modale Verteilungsdichtefunktion zwei Maxima auf.

Durch den Einsatz von Körnungsmischungen als Kontaktmasse, die eine vielmodale (beispielsweise p = 5 bis 10) Verteilungsdichtefunktion aufweisen, können Sichtungseffekte (Separation einzelner Kornfraktionen in der Wirbelschicht, beispielsweise zweigeteilte Wirbelschicht) vermieden werden. Diese Effekte treten insbesondere dann auf, wenn die Maxima der Verteilungsdichtefunktion der Körnungsmischung weit auseinander liegen.

Bei der Kontaktmasse handelt es sich insbesondere um die mit dem Reaktionsgas in Kontakt stehende Körnungsmischung, welche mit Katalysator und auch Promotor vermischt sein kann. Bevorzugt handelt es sich um eine Silicium enthaltende Körnungsmischung, die höchstens 5 Masse-%, besonders bevorzugt höchstens 2 Masse-%, insbesondere höchstens 0,5 Masse-%, andere Elemente als Verunreinigungen enthält. Vorzugsweise handelt es sich um metallurgisches Silicium (Si$_{mg}$), das üblicherweise eine Reinheit von 98 bis 99,5 Masse-% aufweist. Typisch ist beispielsweise eine Zusammensetzung mit 98 Masse-% Siliciummetall, wobei sich die übrigen 2 Masse-% in der Regel zum größten Teil aus den folgenden Elementen zusammensetzen, die ausgewählt werden aus: Fe, Ca, Al, Ti, Cu, Mn, Cr, V, Ni, Mg, B, C, P und O. Ferner können folgende Elemente enthalten sein, die ausgewählt werden aus: Co, W, Mo, As, Sb, Bi, S, Se, Te, Zr, Ge, Sn, Pb, Zn, Cd, Sr, Ba, Y und Cl. Es ist allerdings auch die Verwendung von Silicium einer geringeren Reinheit von 75 bis 98 Masse-% möglich. Vorzugsweise ist jedoch der Siliciummetall-Anteil größer als 75 Masse-%, bevorzugt größer als 85 Masse-%, besonders bevorzugt größer als 95 Masse-%.

Der Kupferkatalysator enthält Kupfer, ist bei der Umsetzung anwesend und kann beispielsweise in metallischer, legierter und/oder salzartiger Form der Arbeitskörnung und/oder der Kontaktmasse zugesetzt werden. Dabei kann es sich insbesondere um Chloride und/oder Oxide bzw. die Legierungen der katalytisch aktiven Elemente handeln. Bevorzugte Verbindungen sind CuCl, CuCl$_2$, CuO oder Mischungen daraus. Die Arbeitskörnung und/oder die Kontaktmasse kann ferner Promotoren enthalten, beispielsweise Sn, Zn und/oder Zinkchlorid. Für das erfindungsgemäße Verfahren ist die Beschaffenheit von Katalysator und/oder Promotor irrelevant - selbige können in jedweder (strukturellen) Form zugesetzt werden.

Die elementare Zusammensetzung des eingesetzten Siliciums und der Kontaktmasse kann beispielsweise mittels Röntgenfluoreszenzanalyse (RFA), ICP-basierten Analysemethoden (ICP-MS, ICP-OES) und/oder Atomabsorptionsspektrometrie (AAS) erfolgen.

Der Katalysator ist im Wirbelschichtreaktor bezogen auf Silicium vorzugsweise in einem Anteil von 0,1 bis 20 Masse-%, besonders bevorzugt von 0,5 bis 15 Masse-%, insbesondere von 0,8 bis 10 Masse-%, insbesondere bevorzugt von 1 bis 5 Masse-%, vorhanden.

Vorzugsweise werden die Kornfraktionen mit Strukturparametern S<0 und S≥0 als vorgefertigte Körnungsmischung dem Wirbelschichtreaktor zugeführt. Gegebenenfalls vorhandene weitere Bestandteile der Kontaktmasse können ebenfalls enthalten sein. Durch den erfindungsgemäßen Anteil einer Fraktion mit Strukturparameter S≥0 von mindestens 1 Masse-% an der Arbeitskörnung ergibt sich für letztere u.a. ein besseres Fließ- und damit Förderverhalten.

Die Kornfraktionen mit Strukturparametern S<0 und S≥0 können auch separat, insbesondere über getrennte Zuleitungen und Behälter, dem Wirbelschichtreaktor zugeführt werden. Die Durchmischung erfolgt dann grundsätzlich bei Ausbildung der Wirbelschicht (*in situ*). Gegebenenfalls vorhandene weitere Bestandteile der Kontaktmasse können ebenfalls separat oder als Bestandteil einer der beiden Kornfraktionen zugeführt werden.

Das Verfahren wird vorzugsweise bei einer Temperatur von 220 bis 380°C, besonders bevorzugt 280 bis 350°C durchgeführt. Der absolute Druck im Wirbelschichtreaktor beträgt vorzugsweise 0,05 bis 1 MPa, besonders bevorzugt 0,08 bis 0,8 MPa, insbesondere 0,1 bis 0,6 MPa.

Vorzugsweise enthält das Reaktionsgas vor Eintritt in den Reaktor mindestens 50 Vol.-%, bevorzugt mindestens 70 Vol.-%, besonders bevorzugt mindestens 90 Vol.-%, MeCl. Neben MeCl kann das Reaktionsgas ferner eine oder mehrere Komponenten ausgewählt aus der Gruppe mit Chlorsilane, Methylchlorsilane, Kohlenwasserstoffe, HCl, $H_2$, CO, $CO_2$, $O_2$ und $N_2$ enthalten. Diese Komponenten können beispielsweise als Verunreinigungen in einem recycelten Gas enthalten sein und/oder zur Steuerung der gewünschten Selektivität gezielt eingesetzt werden.

Das Reaktionsgas kann ferner ein Trägergas enthalten, welches nicht an der Reaktion teilnimmt, beispielsweise Stickstoff oder ein Edelgas wie Argon.

Die Bestimmung der Zusammensetzung des Reaktionsgases erfolgt üblicherweise vor der Zuleitung zum Reaktor über Raman- und Infrarotspektroskopie sowie Gaschromatographie. Dies kann sowohl über stichprobenartig entnommene Proben und anschließende "offline-Analysen" als auch über in das System eingebundene "online"-Analysengeräte erfolgen.

Vorzugsweise beträgt im Wirbelschichtreaktor ein Quotient aus Wirbelschichthöhe zu Reaktordurchmesser 10:1 bis 1:1, bevorzugt 8:1 bis 2:1, besonders bevorzugt 6:1 bis 3:1. Bei der Wirbelschichthöhe handelt es sich um die Dicke oder Ausdehnung der Wirbelschicht.

Das bevorzugte Organochlorsilan der allgemeinen Formel 1 ist Dimethyldichlorsilan. Das Verfahren wird deshalb vorzugsweise auf Selektivität und Produktivität bezüglich Dimethyldichlorsilan optimiert. Weiterhin fallen neben Organochlorsilanen der allgemeinen Formel 1 "hochsiedende Verbindung" oder "Hochsieder" an, welche Verbindungen sind, die aus Silicium, Chlor, Kohlenstoff sowie gegebenenfalls Wasserstoff und/oder Sauerstoff bestehen und einen höheren Siedepunkt als DMDCS (70 °C bei 1013 hPa) aufweisen. In der Regel handelt es sich um Disilane und höhere Oligo- oder Polysilane sowie Siloxane.

Das Verfahren ist vorzugsweise in einen Verbund zur Herstellung von Polysiloxanen eingebunden. Ferner kann das Verfahren Teil eines Verbunds zu Herstellung von Siliconelastomeren, Siliconölen, funktionellen Siloxanen, Siliconharzen, Siliconharzformulierungen, linearen und cyclischen Polydimethylsiloxanen, Silicaten, organofunktionalisierten Silanen, Chlorsilanen und Polysilicium sein.

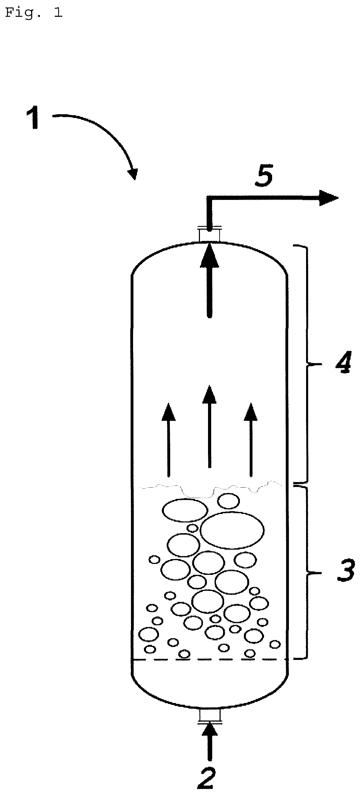

Fig. 1 zeigt beispielhaft einen Wirbelschichtreaktor 1 zur Durchführung des erfindungsgemäßen Verfahrens. Das Reaktionsgas 2 wird vorzugsweise von unten und gegebenenfalls von der Seite (z.B. tangential oder orthogonal zum Gasstrom von unten) in die Kontaktmasse eingeblasen, wodurch die Partikel der Kontaktmasse fluidisiert werden und eine Wirbelschicht 3 bilden. In der Regel wird zum Starten der Reaktion mittels einer außerhalb des Reaktors angeordneten Heizvorrichtung (nicht dargestellt) die Wirbelschicht 3 beheizt. Während des kontinuierlichen Betriebs ist üblicherweise kein Heizen erforderlich. Ein Teil der Partikel wird mit der Gasströmung aus der Wirbelschicht 3 in den Freiraum 4 oberhalb der Wirbelschicht 3 transportiert. Der Freiraum 4 ist durch eine sehr geringe Feststoffdichte gekennzeichnet, wobei diese in Richtung Reaktoraustritt 5 abnimmt.

## Beispiele

In allen Beispielen wurde Silicium derselben Sorte hinsichtlich Reinheit, Qualität und Gehalt an Nebenelementen und Verunreinigungen eingesetzt. Die in den Arbeitskörnungen eingesetzten Kornfraktionen wurden durch Brechen von stückigem $Si_{mg}$ (98,9 Masse-% Si) und anschließendem Mahlen oder durch, dem Fachmann bekannten, Atomisierungstechniken zur Herstellung von partikulärem $Si_{mg}$ (98,9 Masse-% Si) hergestellt. Gegebenenfalls wurde durch Sieben/Sichten klassiert. Hierdurch wurden gezielt Kornfraktionen mit bestimmten Werten für Strukturparameter S hergestellt. Durch Kombination und Mischen dieser Kornfraktionen wurden anschließend Kontaktmassen mit definierten Massenanteilen von Silicium-enthaltenden Partikeln mit einem Strukturparameter S größer/gleich 0 abgemischt. Der Rest der Kornfraktionen wies Silicium-enthaltende Partikel mit einem Strukturparameter S kleiner 0 auf. Zusammen ergaben die Kornfraktionen 100 Masse-%. Um eine größtmögliche Vergleichbarkeit zwischen den einzelnen Versuchen gewährleisten zu können, wurden keine zusätzlichen Katalysatoren oder Promotoren zugesetzt.

Bei allen Beispielen wurde das folgende Verfahren angewandt. Die in den Versuchen eingesetzten Körnungen wiesen Partikelgrößenparameter $d_{50}$ zwischen 320 und 340 $\mu$m auf. Die Betriebstemperatur des Wirbelschichtreaktors lag während der Versuche bei einer Temperatur von ca. 340 °C. Diese Temperatur wurde mit Hilfe einer Kühlung jeweils über den gesamten Versuchszeitraum in etwa konstant gehalten. Das Reaktionsgas, bestehend aus $CH_3Cl$, wurde so zugegeben und die Arbeitskörnung so zudosiert, dass die Höhe der Wirbelschicht über den gesamten Versuchszeitraum im Wesentlichen konstant blieb und die Körnung während der Gesamten Reaktionszeit gewirbelt wird. Der Druck im Reaktor betrug über die gesamte Versuchszeit 0,05 MPa Überdruck. Nach 3 h Laufzeit (konstante Produktivität und Selektivität erreicht) wurden jeweils sowohl eine Flüssigkeitsprobe als auch eine Gasprobe entnommen. Die kondensierbaren Anteile des Produktgasstroms (Chlorsilangasstrom) wurden über eine Kühlfalle bei -40°C kondensiert und mittels Gaschromatographie (GC) analysiert und daraus die Selektivität bezüglich Dimethyldichlorsilan der allgemeinen Formel 1 (DMDCS-Selektivität) sowie [Masse-%] bestimmt. Die Detektion erfolgte über einen Wärmeleitfähigkeitsdetektor. Zudem wurde die DMDCS-Selektivität und die Produktivität [kg/(kg*h)], also die produzierte Menge an Methylchlorsilanen der allgemeinen Formel 1 pro Stunde [kg/h], bezogen auf die im Reaktor eingesetzte Menge an Kontaktmasse (Arbeitskörnung) [kg], gewichtet mit der DMDCS - Selektivität zu Grunde gelegt. Nach jedem Durchlauf wurde der Reaktor vollständig entleert und neu mit Kontaktmasse befüllt.

Die eingesetzten Arbeitskörnungen sowie die Ergebnisse der Versuche sind in Tabelle 2 zusammengefasst. ms ist der Massenanteil an Partikeln S, die einen Strukturparameter S>0 aufweisen.

Tabelle 2

| Versuch | s | $mS{\geq}0$ [Masse- %] | DMDCS - Selektivität [Masse- %] | Produktivität [kg/(kg*h)] | |
|---|---|---|---|---|---|
| VB1* | 0,005 | 0,02 | 82 | 0,10 | |
| VB2* | 0,005 | 0,2 | 83 | 0,12 | |
| VB3* | 0,005 | 0,5 | 83 | 0,14 | |
| AB1 | 0,005 | 1 | 86 | 0,16 | |
| AB2 | 0,005 | 5 | 86 | 0,23 | |
| AB3 | 0,005 | 10 | 90 | 0,31 | |
| AB4 | 0,005 | 20 | 91 | 0,31 | |
| AB5 | 0,005 | 50 | 92 | 0,33 | |
| AB6 | 0,005 | 75 | 94 | 0,30 | |
| AB7 | 0,005 | 95 | 95 | 0,30 | |
| AB8 | 0,050 | 20 | 92 | 0,33 | |
| AB9 | 0,053 | 20 | 93 | 0,34 | |
| AB10 | 0,040 | 20 | 92 | 0,33 | |
| * nicht erfindungsgemäß | | | | | |

Zur Bewertung der ausgewählten Kombinationen aus S und $mS{\geq}0$ [%w] und zur Definition der optimalen Bereiche wurden die Produktivität [kg/(kg*h)], also die produzierte Menge an Methylchlorsilanen der allgemeinen Formel 1 pro Stunde [kg/h], bezogen auf die im Reaktor eingesetzte Menge an Kontaktmasse (Arbeitskörnung) [kg], und die DMDCS-Selektivität zugrunde gelegt. Als optimal bzw. akzeptabel gilt eine Produktivität von > 0,15 kg/(kg*h) und eine DMDCS-Selektivität $\geq$86% bezogen auf die Menge an Methylchlorsilanen der allgemeinen Formel 1. VB1 bis VB5 und AB1 bis AB10 sind stellvertretend für eine Vielzahl an Experimenten aufgeführt, die zur Ermittlung der optimalen Bereiche durchgeführt wurden. Bei den Experimenten VB1 bis VB5 ist die Produktivität und/oder die DMDCS-Selektivität nicht zufriedenstellend. Aus einer Vielzahl derartiger Negativbeispiele wurden die optimalen Bereiche der den Kennzahlen zugrundeliegenden Parameter ermittelt. Daher sind die eingangs im Beispiel genannten Bereiche größer als die beanspruchten Bereiche.

Die Experimente belegen, dass sich mittels MRDS besonders produktiv und selektiv Methylchlorsilane, insbesondere DMDCS herstellen lassen, wenn das Verfahren in den optimalen Bereichen der Kennzahlen S und $mS{\geq}0$ [%w] durchgeführt wird.

**Patentansprüche**

1.  Verfahren zur Herstellung von Methylchlorsilanen der allgemeinen Formel 1

$$(CH_3)_n H_m SiCl_{4-n-m} \qquad (1),$$

in der

n Werte von 1 bis 3 und
m Werte von 0 oder 1 bedeuten,

in einem Wirbelschichtreaktor, bei dem ein Chlormethan enthaltendes Reaktionsgas mit einer partikulären Kontaktmasse, die Silicium enthält, in Gegenwart von Kupferkatalysator umgesetzt wird,
wobei die Arbeitskörnung, welche jene Körnung oder Körnungsmischung bedeutet, die in den Wirbelschichtreaktor eingebracht wird, mindestens 1 Masse-% Silicium-enthaltende Partikel S enthält, die durch einen Strukturparameter S beschrieben sind, wobei S dabei einen Wert von mindestens 0 aufweist und wie folgt berechnet wird:

$$S = (\varphi_s - 0{,}70) \cdot \frac{\rho_{SD}}{\rho_F} \qquad\qquad \text{Gleichung (1),}$$

wobei

$\varphi_S$ Symmetrie-gewichteter Sphärizitätsfaktor
$\rho_{SD}$ Schüttdichte [g/cm$^3$]
$\rho_F$ mittlere Partikelfeststoffdichte [g/cm$^3$] ist.

2. Verfahren nach Anspruch 1, bei dem der Symmetrie-gewichtete Sphärizitätsfaktor $\varphi_S$ der Partikel S 0,70 bis 1 beträgt, wobei die Sphärizität der Partikel S das Verhältnis zwischen dem Flächeninhalt eines Partikelbildes und dem Umfang beschreibt.

3. Verfahren nach einem oder mehreren der voranstehenden Ansprüche, bei dem die mittlere Partikelfeststoffdichte $\rho_F$ der Partikel S mit Strukturparameter $S \geq 0$ 2,20 bis 2,70 g/cm$^3$ beträgt, wobei die Bestimmung nach DIN 66137-2:2019-03 erfolgt.

4. Verfahren nach einem oder mehreren der voranstehenden Ansprüche, bei dem die Arbeitskörnung einen Partikelgrößenparameter $d_{50}$ von 70 bis 1000 $\mu$m aufweist, wobei der Partikelgrößenparameter nach DIN ISO 9276-2 bestimmt wird.

5. Verfahren nach einem oder mehreren der voranstehenden Ansprüche, bei dem das Silicium ein metallurgisches Silicium (Si$_{mg}$)ist, das eine Reinheit von 98 bis 99,5 Masse-% Silicium aufweist.

6. Verfahren nach einem oder mehreren der voranstehenden Ansprüche, bei dem der Kupferkatalysator ausgewählt wird aus CuCl, CuCl$_2$, CuO oder Mischungen daraus.

7. Verfahren nach einem oder mehreren der voranstehenden Ansprüche, bei dem die Temperatur von 220 bis 380°C beträgt.

8. Verfahren nach einem oder mehreren der voranstehenden Ansprüche, bei dem das Reaktionsgas vor Eintritt in den Reaktor mindestens 50 Vol.-% MeCl enthält.

9. Verfahren nach einem oder mehreren der voranstehenden Ansprüche, bei dem das hergestellte Methylchlorsilan der allgemeinen Formel 1 Dimethyldichlorsilan (DMDCS) ist.

**Claims**

1. Process for producing methylchlorosilanes of general formula 1

$$(CH_3)_n H_m SiCl_{4-n-m} \qquad (1),$$

in which

n represents values from 1 to 3 and
m represents values of 0 or 1

in a fluidized bed reactor, wherein a chloromethane-containing reaction gas is reacted with a particulate contact mass containing silicon in the presence of copper catalyst,
wherein the operating granulation, i.e. the granulation or granulation mixture introduced into the fluidized bed reactor, contains at least 1% by mass of silicon-containing particles S described by a structural parameter S, wherein S has a value of at least 0 and is calculated as follows:

$$S = (\varphi_s - 0.70) \cdot \frac{\rho_{SD}}{\rho_F}$$    equation (1),

wherein

$\varphi_S$ is symmetry-weighted sphericity factor
$\rho_{SD}$ is poured density [g/cm$^3$]
$\rho_F$ is average particle solids density [g/cm$^3$].

2. Process according to Claim 1, wherein the symmetry-weighted sphericity factor $\varphi_S$ of the particles S is 0.70 to 1, wherein the sphericity of the particles S describes the ratio between the surface area of a particle image and the circumference.

3. Process according to one or more of the preceding claims, wherein the average particle solids density $\rho_F$ of the particles S having a structural parameter S≥0 is 2.20 to 2.70 g/cm$^3$, wherein the determination is carried out according to DIN 66137-2:2019-03.

4. Process according to one or more of the preceding claims, wherein the operating granulation has a particle size parameter $d_{50}$ of 70 to 1000 $\mu$m, wherein the particle size parameter is determined according to DIN ISO 9276-2.

5. Process according to one or more of the preceding claims, wherein the silicon is a metallurgical silicon ($Si_{mg}$) having a purity of 98% to 99.5% by mass silicon.

6. Process according to one or more of the preceding claims, wherein the copper catalyst is selected from CuCl, CuCl$_2$, CuO or mixtures thereof.

7. Process according to one or more of the preceding claims, wherein the temperature is from 220°C to 380°C.

8. Process according to one or more of the preceding claims, wherein the reaction gas contains at least 50% by volume of MeCl before entry into the reactor.

9. Process according to one or more of the preceding claims, wherein the produced methylchlorosilane of general formula 1 is dimethyldichlorosilane (DMDCS).

**Revendications**

1. Procédé pour la préparation de méthylchlorosilanes de formule générale 1

    (CH$_3$)$_n$H$_m$SiCl$_{4-n-m}$        (1),

dans laquelle

n signifie des valeurs de 1 à 3 et
m signifie des valeurs de 0 ou 1,
dans un réacteur à couche tourbillonnante, dans lequel un gaz de réaction contenant du chlorométhane est transformé avec une masse de contact particulaire qui contient du silicium, en présence d'un catalyseur de cuivre, la granulométrie de travail, qui signifie la granulométrie ou le mélange de granulométries qui est introduit(e) dans le réacteur à couche tourbillonnante, contenant au moins 1 % en masse de particules S contenant du silicium, qui sont décrites par un paramètre structural S, S présentant à cet égard une valeur d'au moins 0 et étant calculé comme suit :

$$S = (\varphi_s - 0{,}70) \cdot \frac{\rho_{SD}}{\rho_F}$$ équation (1)

$\varphi_S$ étant un facteur de sphéricité pondéré en symétrie
$\rho_{SD}$ étant la densité apparente [g/cm$^3$] $\rho_F$ étant la densité solide moyenne de particule [g/cm$^3$].

2. Procédé selon la revendication 1, dans lequel le facteur de sphéricité $\varphi_s$ pondéré en symétrie des particules S est de 0,70 à 1, la sphéricité des particules S décrivant le rapport entre la superficie d'une image de particule et la circonférence.

3. Procédé selon l'une ou plusieurs des revendications précédentes, dans lequel la densité solide moyenne de particule $\rho_F$ des particules S dotées d'un paramètre structural S ≥ 0 est de 2,20 à 2,70 g/cm$^3$, la détermination étant réalisée selon la norme DIN 66137-2:2019-03.

4. Procédé selon l'une ou plusieurs des revendications précédentes, dans lequel la granulométrie de travail présente un paramètre de taille de particule $d_{50}$ de 70 à 1 000 $\mu$m, le paramètre de taille de particule étant déterminé selon la norme DIN ISO 9276-2.

5. Procédé selon l'une ou plusieurs des revendications précédentes, dans lequel le silicium est un silicium métallurgique ($Si_{mg}$) qui présente une pureté de 98 à 99,5 % en masse de silicium.

6. Procédé selon l'une ou plusieurs des revendications précédentes, dans lequel le catalyseur de cuivre est choisi parmi CuCl, CuCl$_2$, CuO et des mélanges de ceux-ci.

7. Procédé selon l'une ou plusieurs des revendications précédentes, dans lequel la température est de 220 à 380 °C.

8. Procédé selon l'une ou plusieurs des revendications précédentes, dans lequel le gaz de réaction contient au moins 50 % en volume de MeCl avant l'entrée dans le réacteur.

9. Procédé selon l'une ou plusieurs des revendications précédentes, dans lequel le méthylchlorosilane de formule générale 1 préparé est le diméthyldichlorosilane (DMDCS).

Fig. 1

**IN DER BESCHREIBUNG AUFGEFÜHRTE DOKUMENTE**

**In der Beschreibung aufgeführte Patentdokumente**

- DE 4303766 A1

- US 20100160664 A1

**In der Beschreibung aufgeführte Nicht-Patentliteratur**

- **LOBUSEVICH, N.P et al.** Effect of dispersion of silicon and copper in catalysts on direct synthesis. *Khimiya Kremniiorganich. Soed.*, 1988, 27-35